# EUROPEAN PATENT APPLICATION

(11) **EP 1 737 190 A2**
(43) Date of publication of application: **27.12.2006**
(21) Application number: 06253261.9
(22) Date of filing: 23.06.2006
(51) Int. Cl.: H04L 29/06, H04L 12/22, H04L 12/58

(54) **Method for encrypting/decrypting e-mail, as well as storage medium and module**

(30) Priority: 24.06.2005 CN 200510079693
(71) Applicant: HiTRUST. COM Incorporated, Tortola (VG)
(72) Inventor: Ho, Yu-Wei, Taipei (TW); Wu, Jia-Chang, Taipei (TW); Yang, Tsai-Ching, Taipei (TW)
(74) Representative: Pratt, David Martin

(57) **Abstract**

In an e-mail encryption/decryption method, an e-mail encryption process is executed at a sending end (1) before sending an e-mail message to a receiving end (2). The e-mail encryption process includes providing an e-mail message having a header and text, requesting selection of at least one portion of the text and decision of a password set (313) corresponding to the selected portion, and encrypting the selected portion into an encrypted text region (332) to be decrypted using the password set (313) before sending the e-mail message to the receiving end (2) upon receipt of a sending request. The header, encrypted text region (332) and non-selected text portion (333) of the e-mail message are timely displayed when the receiving end (2) receives the e-mail message. Thus, the sending end (1) can select to encrypt an e-mail message in part to facilitate use.

## Description

The invention relates to a method for encrypting and decrypting e-mail, and a module therefor, more particularly to a method for encrypting and decrypting e-mail, which can encrypt segments of text of an e-mail message that require different passwords for decryption, and to a storage medium and a module for implementing the method.

With the popularity of the Internet, various Internet applications have been developed, and electronic mail (e-mail) for transmitting information between two places over the Internet is extensively used. During the transmission process, e-mail maybe stolen by a third party. The security of e-mail is therefore in question, particularly for e-mail with important content.

At present, e-mail can be encrypted and decrypted using asymmetric encryption/decryption techniques. For example, the e-mail is encrypted using a public key of the recipient, and the recipient can use a private key she/he keeps to decrypt the e-mail. Thus, only the recipient who has the private key can decrypt that particular e-mail. Even if the e-mail is lost or stolen during the transmission process, a third party cannot read the content of the e-mail (i.e., the text of the e-mail). However, since it is necessary to apply for certification, and since the operating interfaces used are quite complicated, asymmetric encryption/ decryption techniques are not popular.

Further, one existing encryption technique is to encrypt the full text of an e-mail message using a password, such as a public key, even though some of the text of the e-mail message, e.g., the salutation at the beginning of the text, the complimentary closing, and the signature of the sender, etc., do not require encryption. Thus, once the password is broken, the entire content of the e-mail message will be decrypted. Moreover, in the case that one portion of the content of the text is to be disclosed to party A only, and the other portion thereof is to be revealed to party B only, the user needs to send the relevant contents in two e-mail messages, and cannot encrypt portions of the contents of the same e-mail message with respect to different recipients, which is quite inconvenient to the user.

Therefore, an object of the present invention is to provide a method for encrypting/decrypting e-mail, which is more convenient to use, and a storage medium and a module for implementing the method.

Another obj ect of the present invention is to provide a method for encrypting/decrypting e-mail, which permits encryption of text by segments requiring different passwords for decryption, and a storage medium and a module for implementing the method.

Still another object of the present invention is to provide a method for encrypting/decrypting e-mail, which provides enhanced security, and a storage medium and a module for implementing the method.

Accordingly, a method for encrypting/decrypting e-mail of the present invention includes the following steps:
(A)providing an e-mail message including a header and text at a sending end, and requesting selection of at least one portion of the text and decision of a password set corresponding to the selected portion; and
(B) upon receipt of a sending request, encrypting the selected portion into an encrypted text region to be decrypted using the password set before sending the e-mail message to a receiving end.

Other features and advantages of the present invention will become apparent in the following detailed description of the preferred embodiment with reference to the accompanying drawings, of which:
Figure 1 is a schematic diagram to illustrate an architecture for implementing the preferred embodiment of a method for encrypting and decrypting e-mail according to the present invention;
Figure 2 is a schematic block diagram of an encryption/decryption module of the preferred embodiment;
Figure 3 is a flowchart to illustrate an encryption process of the preferred embodiment;
Figure 4 is a flowchart to illustrate a decryption process of the preferred embodiment;
Figure 5 illustrates an example in which a portion of the text of an e-mail message is selected for encryption in the preferred embodiment;
Figure 6 illustrates an example of a mail text encryption dialog window to request input of a password in the preferred embodiment;
Figure 7 illustrates an example of an e-mail message provided in the preferred embodiment, in which a portion of the message has been selected for encryption before sending;
Figure 8 illustrates an example of an encrypted e-mail message that is opened at a receiving end according to the preferred embodiment;
Figure 9 illustrates an example of a mail text decryption dialog window to request input of a password in the preferred embodiment; and
Figure 10 illustrates an example of a text segment content displaying window after decryption of content of the selected portion according to the preferred embodiment.

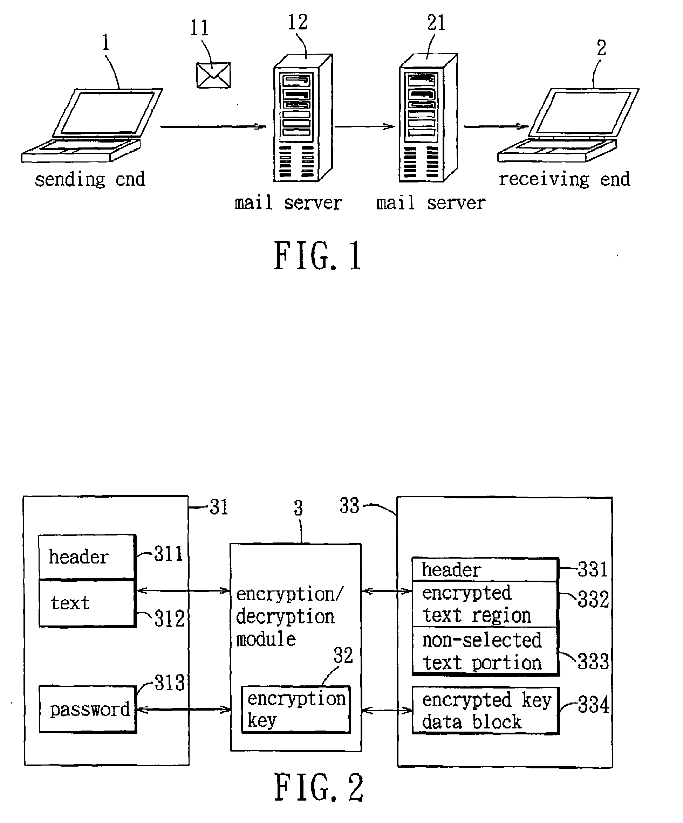

Referring to Figure 1, the method for encrypting/decrypting e-mail according to the present invention is implemented by a sending end 1 and a receiving end 2. Both the sending end 1 and the receiving end 2 are provided with an electronic device having a network-accessing function, such as a computer. Besides, both the sending end 1 and the receiving end 2 are provided with software programs for sending and receiving e-mail, such as Outlook®, or a browser for accessing an on-line mailbox to send and receive e-mail. The sending end 1 sends an encrypted e-mail message 11 via the Internet to a mail server 12 of the sending end 1. The mail server 12 of the sending end 1 then sends the e-mail message 11 to a mail server 21 of the receiving end 2. The receiving end 2 can download the e-mail message 11 from the mail server 21 for decryption into plain text. In this embodiment, both the sending end 1 and the receiving end 2 are provided with an encryption/decryption module 3 as shown in Figure 2 to execute an e-mail encryption/decryption process. The encryption/decryption module 3 in this preferred embodiment can be firmware or a computer program, and the computer program can be recorded on a storage medium for loading into the electronic device at the sending end 1 and the receiving end 2 if needed.

An e-mail message 31 to be encrypted has a header 311, text 312, and a password set 313 that is set by the sender and that is to be used during encryption. The header 311 includes information related to the receiving end 2 and subject of the e-mail message 31. The text 312 is content of the e-mail message written by the sender to advise the receiving end 2 of relevant information. To facilitate description, the password set 313 in this embodiment includes only one password, and the password is required to be inputted when the user decides to encrypt a selected portion of the text 312 (to be described hereinafter).

To eliminate the inconvenience associated with the asymmetric encryption/decryption techniques of the prior art, the encryption/decryption module 3 of the preferred embodiment employs a symmetric encryption/decryption technique. Symmetric encryption/decryption algorithms and corresponding encryption key lengths of current symmetric encryption/decryption techniques are set forth as follows:

| Algorithm | Encryption Key Length |
|---|---|
| DES | 64-bits |
| 3DES | 128-bits |
| 3DES | 192-bits |
| AES | 128-bits |
| AES | 192-bits |
| AES | 256-bits |

The encryption/decryption module 3 of this embodiment uses the AES encryption/decryption algorithm, and provides a low encryption strength with an encryption key length of 128 bits, a medium encryption strength of 192 bits, and a high encryption strength of 256 bits for the user' s selection and setting, so as to eliminate the inconvenience associated with the conventional asymmetric encryption/decryption techniques that require applying for certification and that involve relatively complicated operating interfaces.

Furthermore, to facilitate use, the text 312 of the e-mail message 31 in this embodiment allows the user to select to encrypt a portion of the text 312 and not to encrypt other portions of the text 312. Before the e-mail message 31 is sent, the encryption/decryption module 3 will randomly generate an encryption key 32 and use the encryption key 32 to encrypt the selected portion of the text 312 so as to form an encrypted text region 332, and will use the password 313 to encrypt the encryption key 32 into an encrypted key data block 334. Therefore, an encrypted e-mail message 33 generally has a header 331, an encrypted text region 332, a non-selected text portion 333, and an encryption key data block 334. The header 311 and the non-selected portion of the text 312 of the e-mail message 31 to be encrypted are respectively identical to the header 331 and the non-selected text portion 333 of the encrypted e-mail message 33. In addition, prior to encryption of the encryption key 32 using the password 313, the encryption/decryption module 3 extracts a message authentication code of the encryption key 32 according to a specified rule. The message authentication code is subsequently appended to the encryption key data block 334.

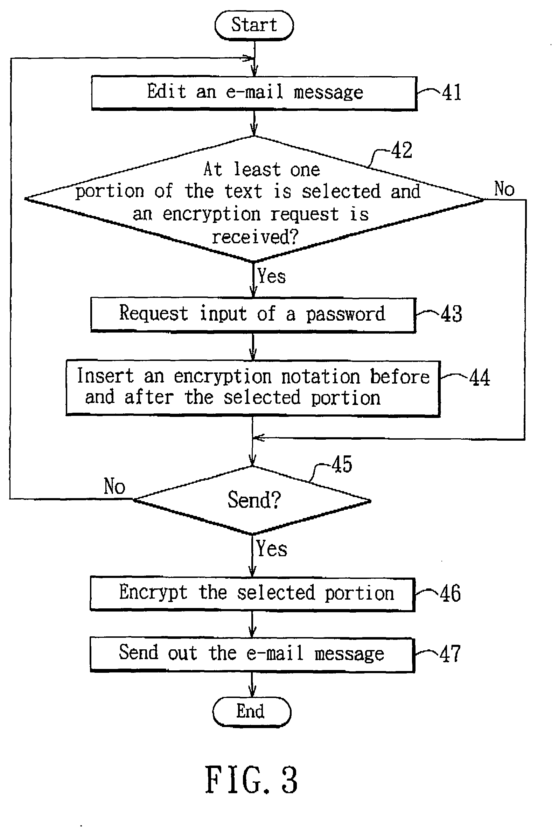

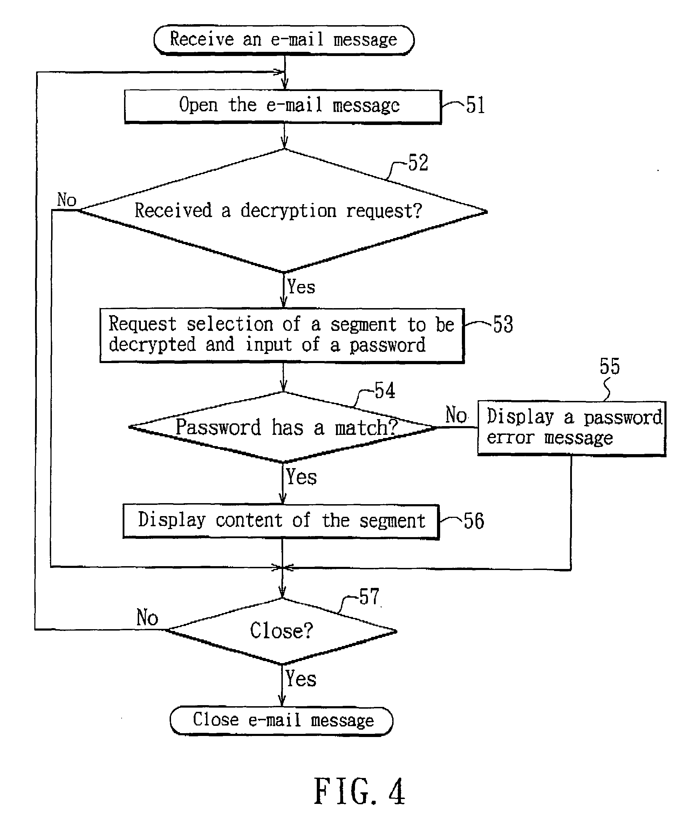

In order to facilitate understanding of the preferred embodiment, the e-mail encryption/decryption process will be described in the succeeding paragraphs with reference to Figure 2 in combination with Figures 3 and 4. Initially, reference is made to Figure 3 to illustrate the e-mail encryption process. The encryption/decryption method in this embodiment is integrated with mail software, such as Outlook®, to facilitate use.

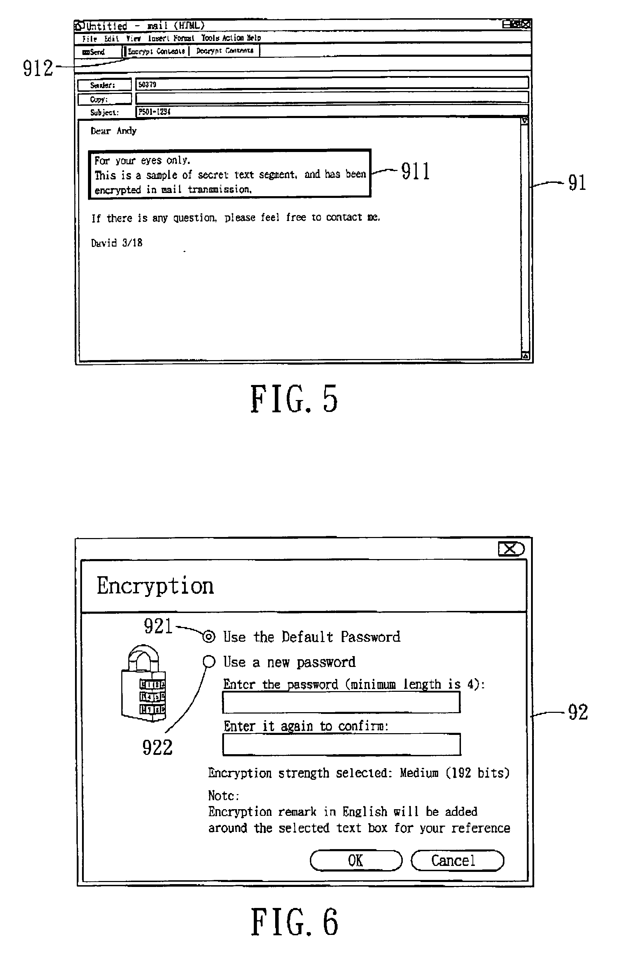

In step 41, an e-mail message 31 is edited. As shown in Figure 5, a header and content of text of the e-mail message 31 are edited via an e-mail interface 91. Certainly, the e-mail message may be a previously stored draft message. If the user feels that a portion of the text of the e-mail message needs to be encrypted during the process of editing the text, the user can use the cursor to select a portion 911 to be encrypted and then click an encryption option 912 to enter an encryption request. Herein, if the e-mail message is to be viewed by various recipients, and the contents to be respectively viewed thereby are different, the portion to be selected may be divided into several segments. Therefore, in step 41, one of the segments for a certain receiving end is selected for encryption. After encrypting and setting said one of the segments, another segment to be encrypted is selected for encryption. To facilitate description, in this example, the portion to be selected is set to merely include a single segment for one recipient.

In step 42, the encryption/decryption module 3 determines whether at least one portion of the text was selected and an encryption request was received. If it is determined to be yes in step 42 , step 43 is performed. On the contrary, if it is determined to be no in step 42, the flow skips to step 45.

In step 43, the encryption/decryption module 3 will first request the user to input a password. In this preferred embodiment, a mail text encryption dialog window 92 such as that shown in Figure 6 will be displayed to request the user to input the password 313. The user can select an option 921 to use a default password or select an option 922 to input the password 313. After the user has inputted the password 313, the encryption/decryption module 3 will determine whether the password 313 matches a password checking rule. If a match is found, the flow proceeds to step 44. If there is a mismatch, a password error message will be displayed to request input of the password once more until the inputted password 313 matches the password checking rule. The password checking rule in this embodiment requires a password to have 4-16 characters and be a combination of predetermined symbols of A-Z, 0-9, "=" , "-", " ["," ]", ".", ",", ";", "\", and "/".

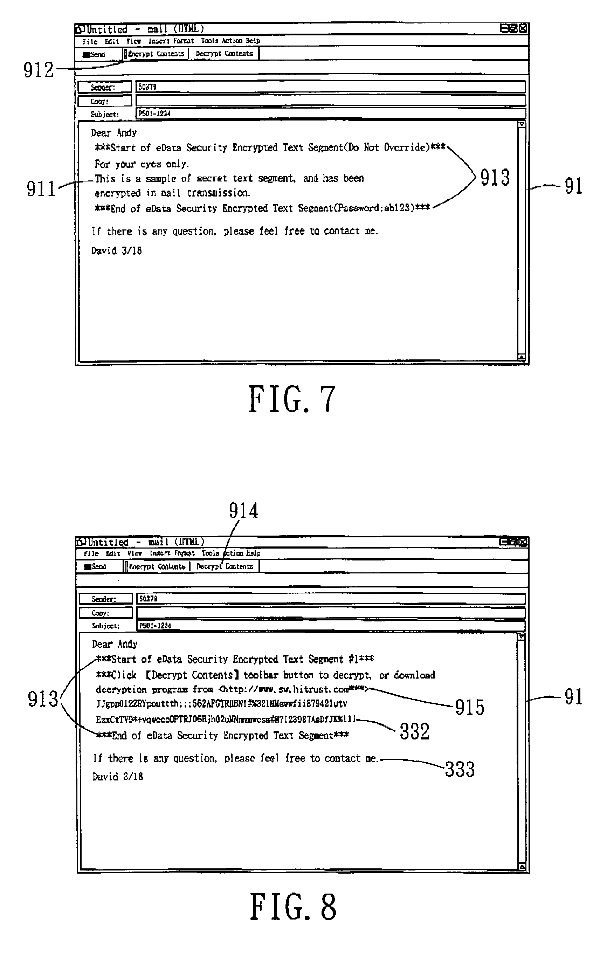

In step 44, as shown in Figure 7, the encryption/decryption module 3 will first insert an encryption notation 913, such as an asterisk, before and after the selected portion so as to set the selected portion apart from the non-selected portion. After step 44 is ended, the flow goes on to step 45.

In step 45, it is determined whether the user has requested to send out the e-mail message. If it is determined to be yes in step 45, step 46 is executed. On the contrary, if it is determined to be no in step 45, the flow returns to step 41 to continue with the editing of the e-mail message. When the flow returns to step 41, in addition to continuing with editing of the e-mail message, the user can also perform encryption processing (steps 42-44) with respect to other segments in the text 312. Therefore, if the selected portion of the text 312 is to be divided into segments exclusively intended for a plurality of recipients, respectively, steps 41-45 need to be repeated several times to add encryption notations 913 before and after each of the segments for subsequent encryption with respect to the different segments in step 46.

In step 46, upon receipt of a command to send out the e-mail message, the encryption/decryption module 3 will randomly generate an encryption key 32 to encrypt the selected portion into an encrypted text region 332, and use the password 313 to encrypt the encryption key 32 into an encrypted key data block 334. At the same time, since the portion selected for encryption may have more than one segment, each of the segments will be assigned a serial number in step 46 so as to facilitate selection at the receiving end 2. Furthermore, in step 46, the encryption/decryption module 3 of this embodiment will further add a decryption scheme message (to be described hereinafter) to the text 312 so as to notify the receiving end 2 of the scheme used for decryption. Certainly, if the user does not select any portion of the text 312 for encryption, step 46 can be skipped, and the flow goes to step 47. In addition, when the selected portion for encryption includes a plurality of segments, the encryption/decryption module 3 will randomly generate an encryption key 32 to correspond to each of the segments so as to encrypt the segments, extract a message authentication code of the encryption key 32, and encrypt the encryption key 32 with the corresponding password 313 so as to form an encrypted key data block 334 appended with the message authentication code of the encryption key 32. Therefore, the encrypted e-mail message 33 may contain a plurality of encrypted key data blocks 334, and the encrypted text region 332 may contain a plurality of encrypted segments.

Finally, in step 47, the mail software will send the encrypted e-mail message 33 to the receiving end 2 through the mail servers 12, 21 (see Figure 1).

Thus, the sender can select a portion of the content of the text 312 for encryption when editing the e-mail message 31, and unimportant portions, such as the salutation at the beginning of the text, the complimentary close, and the signature of the sender, etc., can also be shown. Besides, the selected portion can be divided into segments for encryption such that the encrypted segments require different passwords for decryption so as to ensure security of important data. At the same time, the same e-mail message may be edited into a plurality of encrypted segments for browsing by different recipients so as to achieve the effect of convenient use.

Reference is made to Figures 2 and 4 to illustrate the process of decrypting the e-mail message 33. The decryption process starts when the encrypted e-mail message 33 is received at the receiving end 2 from the mail server 21. It is noted that the sender at the sending end 1 can use various methods to notify the recipient at the receiving end 2 of the password 313.

Initially, in step 51, the encrypted e-mail message 33 is opened using e-mail related software. As shown in Figure 8, the header 331, the encrypted text region 332, the non-selected text portion 333, and the encryption notations 913 of the e-mail message 33 will be displayed. In this embodiment, when the user desires to view the encrypted text region 332, a decrypt ion option 914 can be clicked to input a decryption request. If the recipient at the receiving end 2 is not familiar with the decryption scheme, a decryption scheme message 915 is available to advise the user to click the decryption option 914 or to download a relevant program for decryption from a relevant website in case the encryption/decryption module 3 is not installed. It is apparent from Figure 8 that, as opposed to the prior art which util i zes a single password to encrypt the entire content of the text of an e-mail message, the text in the preferred embodiment can be divided into the encrypted text region 332, and the non-selected text portion 333 which is displayed in a normal form, and the encrypted text region 332 may contain at least one encrypted segment, thereby achieving the effect of convenient use.

Further, in step 52, it is determined whether a decryption request was received. If it is determined to be yes in step 52, the flow goes to step 53. On the contrary, if it is determined to be no in step 52, the flow skips to step 57.

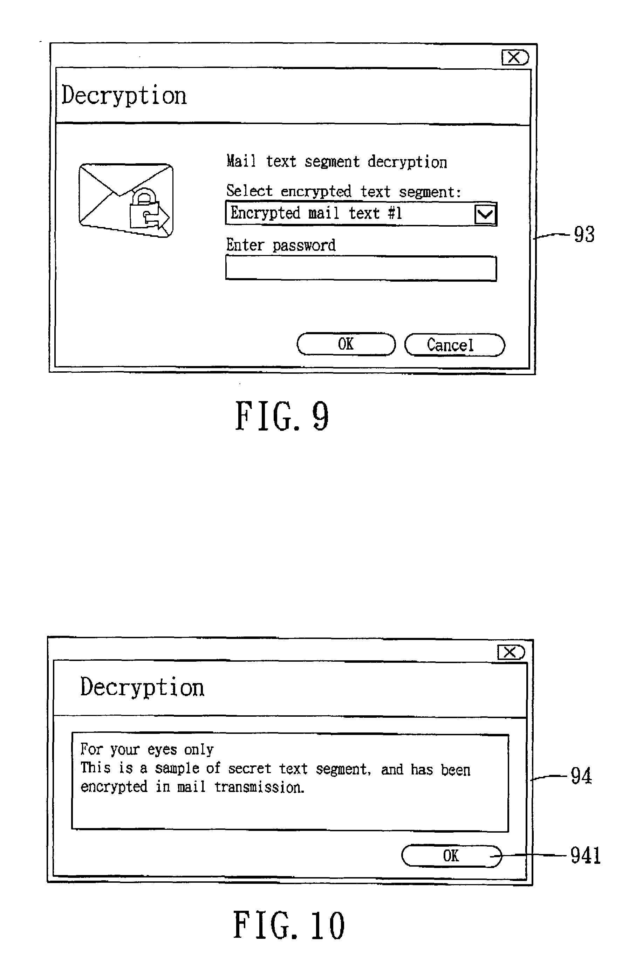

In step 53, the encryption/decryption module 3 will display a mail text decryption dialog window 93 such as that shown in Figure 9 so as to request the recipient to select the segment to be decrypted and to input a password. Since the encrypted text region 332 in this example only has a single segment, there is no need to make a selection, and the available segment is directly used. If the encrypted text region 332 contains a plurality of segments, it is necessary to select one of the segments, which is selected using the serial number thereof.

Subsequently, in step 54, it is determined whether the inputted password has a match, i.e., whether the inputted password matches the password inputted at the sending end 1 during encryption. In step 54, the encryption/decryption module 3 will first decrypt the encryption key data block 334 using the inputted password, and then extract a message authentication code of the encrypted key data block 334 thus decrypted according to the same specified rule used at the sending end 1. Finally, the extracted message authentication code is compared with the message authentication code appended to the encrypted key data block 334 to determine whether the inputted password has a match. Specifically, if the inputted password has a match, the extracted message authentication code will be identical to the message authentication code appended to the encrypted key data block 334. On the contrary, if the inputted password does not have a match, the extracted message authentication code will be different from the message authentication code appended to the encrypted key data block 334. If it is determined to be yes in step 54, step 56 is executed to display the content of the selected segment as decrypted. On the contrary, if it is determined to be no in step 54, step 55 is executed to display a password error message, and the decryption operation is ended. After step 55 is ended, the flow skips to step 57 to determine whether the e-mail message 33 is to be closed.

In step 56, when it is confirmed that the password has a match, the selected segment of the encrypted text region 332 is decrypted, and the content of the selected segment is displayed. Specifically, the encryption/ decryption module 3 will use the encryption key 32 obtained in step 54 to decrypt the selected segment (i.e., the encrypted text region 332 in this example) into plain text. In this embodiment, for security's sake, as shown in Figure 10, a text segment content displaying window 94 is opened, and the content of the selected segment thus decrypted is displayed in the text segment content displaying window 94. After the recipient has finished reading the content of the selected segment, he/she can click a confirmation (OK) key 941 in the text segment content displaying window 94 to close the text segment content displaying window 94. Thus, after decryption, the encrypted text region 332 of the e-mail message 33 will not be replaced by the plain text content, and the plain text content is displayed temporarily in the text segment content displaying window 94. Therefore, when a third person re-opens the e-mail message 33 at the receiving end 2, what he/she sees is merely the encrypted text region 332. Viewing of the plain text content thereof requires inputting of the corresponding password once again, thereby preventing a third party from looking at such confidential data when the intended recipient temporarily leaves the computer at the receiving end 2. After step 56 is ended, the flow goes on to step 57.

In step 57, it is determined whether closing of the e-mail message 33 was requested. If it is determined to be yes in step 57, the e-mail message 33 is closed, and the flow is ended. On the contrary, if it is determined to be no in step 57, the flow returns to step 52 to continue the determination of whether the recipient has submitted a decryption request so as to view other segments in the encrypted text region 332 or to review the previously decrypted segment. Thus, if the encrypted text region 332 has a plurality of segments, steps 52-57 can be repeated to decrypt the contents of the respective segments. If the segments are intended for different recipients, each recipient only needs to select to decrypt and view the respective segment.

Furthermore, although the preferred embodiment is illustrated hereinabove based on the text of the e-mail message, the encryption of important portions and the technical concept of encrypting different segments that require different passwords for decryption are also applicable to the editing of ordinary file contents, in which each file has a file name and a file content. For instance, portions of the content of a file written using word processing software, such as Word®, can be selected for encryption, and segments can also be selected for encryption such that the encrypted segments require different passwords for decryption so as to effectively secure the data contents of important files. Particularly, the security of the files can be ensured when they need to be sent from the sending end 1 to the receiving end 2.

As illustrated, the method and module for encrypting and decrypting e-mail according to the present invention employ a symmetric encryption/decryption technique to facilitate use. Besides, during encryption, the user is able to select a portion of the text 312 for encryption, and is also able to select several segments of the text 312 for encryption such that the encrypted segments require different passwords for decryption so as to achieve better encryption flexibility and more convenient use. In addition, during decryption, the decrypted content is displayed temporarily in the text segment content displaying window 94, and the encrypted e-mail message 33 still has the encrypted text region 332 so that, if the e-mail 33 is accidentally opened by a third party, the content of the encrypted text region 332 will remain incomprehensible without the password, thereby achieving the effect of enhanced security.

## Claims

1. A method for encrypting/decrypting e-mail, **characterized by** the following steps:
(A) providing an e-mail message including a header and text at a sending end (1), and requesting selection of at least one portion of the text and decision of a password set (313) corresponding to the selectedportion; and
(B) upon receipt of a sending request, encrypting the selectedportion into an encrypted text region (332) to be decrypted using the password set (313) before sending the e-mail message to a receiving end (2).

2. The method for encrypting/decrypting e-mail according to Claim 1, further **characterized by** a step (C) of timely displaying the header, the encrypted text region (332), and a non-selected text portion (333) of the e-mail message when the e-mail message is received at the receiving end (2).

3. The method for encrypting/decrypting e-mail according to Claim 2, **characterized in that**: in step (A), the selected portion has a plurality of segments, and the password set (313) includes a plurality of passwords corresponding respectively to the segments; and in step (B), encryption keys (32) respectively corresponding to the segments are generated to encrypt the respective segments such that the encrypted text region (332) has a plurality of segments, a message authentication code of each of the encryption keys (32) is extracted, each of the encryption keys (32) is encrypted using the password corresponding to the respective one of the segments, and the message authentication codes of the encryption keys (32) and the encryption keys (32) thus encrypted are appended to the e-mail message.

4. The method for encrypting/decrypting e-mail according to Claim 3, **characterized in that**, in step (A), an encryption notation (913) is inserted before and after each of the segments.

5. The method for encrypting/decrypting e-mail according to Claim 4, **characterized in that** a decryption process is performed if a decryption request is received in step (C), the decryption process including the following sub-steps:
(C-1) requesting selection of one of the segments in the encrypted text region (332) and input of a password so as to decrypt the encrypted encryption key (32) corresponding to the selected segment and to extract a message authentication code of the encryption key (32) thus decrypted; and
(C-2) if the extracted message authentication code matches the message authentication code corresponding to the selected segment and appended to the e-mail message, decrypting the selected segment using the encryption key (32) thus decrypted and displaying a decryption result in a window.

6. The method for encrypting/decrypting e-mail according to Claim 2, **characterized in that**: in step (B), an encryption key (32) is generated to encrypt the selected portion, a message authentication code of the encryption key (32) is extracted, the encryption key (32) is encrypted using the password set (313), and the message authentication code of the encryption key (32) and the encryption key (32) thus encrypted are appended to the e-mail message; and in step (C), if a decryption request associated with the encrypted text region (332) is received, input of a password is requested, and the inputted password is used to decrypt the encrypted encryption key (32) and the message authentication code of the encryption key (32) thus decrypted is extracted such that when the extracted message authentication code matches the message authentication code appended to the e-mail message, content of the encrypted text region (332) thus decrypted is displayed in a window.

7. The method for encrypting/decrypting e-mail according to Claim 1, **characterized in that** in step (B), the selected portion is encrypted using a symmetric encryption/decryption technique.

8. A storage medium for enabling an electronic device to execute e-mail encryption/decryption steps, each of a sending end (1) and a receiving end (2) being provided with the electronic device, the electronic device at the sending end (1) sending an e-mail message containing a header and text to the electronic device at the receiving end (2), the e-mail message being opened by the electronic device at the receiving end, the e-mail encryption/decryption steps being executed upon sending of the e-mail message from the sending end (1) and upon opening of the e-mail message at the receiving end (2), the e-mail encryption/decryption steps being **characterized by**:
(A) requesting selection of at least one portion of the text at the sending end (1), and deciding on a password set (313) corresponding to the selected portion; and
(B) upon receipt of a sending request, encrypting the selected portion into an encrypted text region (332) to be decrypted using the password set (313) before sending the e-mail message to the receiving end (2).

9. The storage medium according to Claim 8, **characterized in that** the e-mail encryption/decryption steps further include a step (C) of timely displaying the header, the encrypted text region (332), and a non-selected text portion (333) of the text of the e-mail message when the e-mail message is received at the receiving end (2).

10. The storage medium according to Claim 9, **characterized in that**, instep (A), the selected portion has a plurality of segments, and the password set (313) includes a plurality of passwords corresponding respectively to the segments and, in step (B), encryption keys (32) respectively corresponding to the segments are generated to encrypt the respective segments such that the encrypted text region (332) has a plurality of segments, a message authentication code of each of the encryption keys (32) is extracted, each of the encryption keys (32) is encrypted using the password corresponding to the respective one of the segments, and the message authentication codes of the encryption keys (32) and the encryption keys (32) thus encrypted are appended to the e-mail message.

11. The storage medium according to Claim 10, **characterized in that**, in step (A), an encryption notation (913) is inserted before and after each of the segments.

12. The storage medium according to Claim 10, **characterized in that**, a decryption process is performed if a decryption request is received in step (C), the decryption process including the following sub-steps:
(C-1) requesting selection of one of the segments in the encrypted text region (332) and input of a password so as to decrypt the encrypted encryption key (32) of the selected segment and to extract a message authentication code of the encryption key (32) thus decrypted; and
(C-2) if the extracted message authentication code matches the message authentication code corresponding to the selected segment, decrypting the selected segment using the encryption key (32) thus decrypted and displaying a decryption result in a window.

13. A method for encrypting/decrypting file content by segments, **characterized by** the following steps:
(A) editing a file, the file having a file content, the file content having a plurality of segments;
(B)if it is detected that at least one portion of the file content was selected and an encryption request was inputted, requesting input of a password set (313) corresponding to the selected portion; and
(C)encrypting the selected portion.

14. The method according to Claim 13, **characterized in that**, in step (B), the selected portion has a plurality of segments, and the password set (313) includes a plurality of passwords corresponding respectively to the segments and, in step (C), encryption keys (32) respectively corresponding to the segments are generated to encrypt the respective segments, a message authentication code of each of the encryption keys (32) is extracted, and each of the encryption keys (32) is encrypted using the password corresponding to the respective one of the segments.

15. The method according to Claim 14, **characterized in that**, in step (C), an encryption notation (913) is inserted before and after the selected portion.

16. The method according to Claim 13, **characterized in that**, in step (C), a symmetric encryption/decryption technique is used to encrypt the selected portion.
